# EUROPÄISCHE PATENTSCHRIFT

(11) **EP 0 914 786 B1**
(45) Veröffentlichungstag und Bekanntmachung des Hinweises auf die Patenterteilung: **23.04.2003**
(21) Anmeldenummer: 98118713.1
(22) Anmeldetag: 02.10.1998
(51) Int. Cl.: A47C 5/04

(54) **Rohrgestell für Möbel und Verfahren zur Herstellung desselben**
Tubular frame for furniture and method of manufacturing the same
Cadre tubulaire pour meubles et procédé de sa fabrication

(30) Priorität: 04.11.1997 DE 19448566
(43) Veröffentlichungstag der Anmeldung: 12.05.1999
(73) Patentinhaber: Sedus Stoll AG, 79761 Waldshut-Tiengen (DE)
(72) Erfinder: Keppler, Alexander, 79725 Laufenburg/Baden (DE); Stadler, Gerhard, 79809 Weilheim/Remetschwiel (DE)
(74) Vertreter: Pöpper, Evamaria, Dr.

(56) Entgegenhaltungen:
- DE-A- 2 149 950
- DE-B- 2 300 409
- FR-A- 2 208 467
- GB-A- 632 618

## Beschreibung

### Technisches Gebiet

Die Erfindung bezieht sich auf das Gebiet der Möbelherstellung. Sie betrifft ein Rohrgestell für Möbel, welches an mindestens einer Stelle auf Gehrung gesägt und geschweißt ist, wobei im Bereich der Gehrung zum Zwecke einer Versteifung ein zweischenkliges, sich in beide Richtungen des Rohrgestelles erstreckendes Einlegeteil aus Flachmaterial im Rohrgestell angeordnet ist. Die Erfindung betrifft auch ein Einlegeteil für das Rohrgestell und ein Verfahren zur Herstellung dieses Rohrgestelles.

### Stand der Technik

Zur Realisierung von Wölbungen oder Ecken in Rohrgestellen für Möbel werden die verwendeten Rohre oftmals auf Gehrung gesägt, und anschließend werden die schrägen Kanten miteinander verschweißt. In diesen Bereichen besteht aber beim Auftreten hoher Belastungen die Gefahr des Einknickens des Rohrgestelles bzw. des Bruches der Schweißnaht. Diese Gefahr ist bei den als Freischwinger bekannten Sitzmöbeln besonders groß.

Daher wird als Versteifungsmaßnahme im Bereich der Gehrung ein Einlegeteil im Inneren des Rohrgestelles angeordnet. Im Prospekt der Fa. Girsberger "Freischwinger 9500" wird beispielsweise auf eingearbeitete Stahlkerne in den Gehrungen des Gestelles eines Freischwingerstuhles hingewiesen, die eine zusätzliche Sicherheit bieten.

Es ist bekannt, Einlegeteile unterschiedlichster Ausführungsformen zu verwenden, z. B. gebogene Rundstäbe, auf Gehrung geschweißte Rundstäbe oder auch Flachmaterial.

Damit diese Einlegeteile im Rohrgestell nicht wackeln, was zu unerwünschten Geräuschen beim Abstellen und Bewegen der Möbel führen würde, werden die Einlegeteile im Rohrgestell fixiert. Bisher sind folgende Möglichkeiten dazu bekannt:
- Anschweißen des Einlegeteiles durch eine Bohrung in der Rohrwandung,
- Einpressen der Einlegeteile in das Rohrgestell und
- Verschrauben der Einlegeteile mit dem Rohrgestell.

Die Nachteile dieser Verfahren bestehen darin, daß sie kostenintensiv und sehr toleranzabhängig sind. Außerdem können durch die bekannten Einlegeteile nachteilig am Ende des Einlegeteiles im Rohrgestell Abdrücke vom Einlegeteil auftreten, die den ästhetischen Eindruck des Möbels verschlechtern.

### Darstellung der Erfindung

Die Erfindung versucht, diese Nachteile zu vermeiden. Ihr liegt die Aufgabe zugrunde, ein Rohrgestell für Möbel der eingangs genannten Art zu schaffen, bei welchem das Einlegeteil einfach und kostengünstig im Rohrgestell befestigbar ist, ohne daß sehr große Anforderungen an die Toleranzgenauigkeit gestellt werden müssen, sowie ein Verfahren zur Herstellung dieses Rohrgestelles. Es ist auch Aufgabe der Erfindung, ein Einlegeteil für das Rohrgestell zu schaffen, welches die Entstehung von Abdrücken im Rohrgestell verhindert.

Erfindungsgemäß wird dies dadurch erreicht, daß bei einem Rohrgestell für Möbel gemäß dem Oberbegriff des Anspruchs 1 das Einlegeteil mit mindestens einem im/am Einlegeteil fixierten Federbügel im Rohrgestell verspannbar ist.

Erfindungsgemäß wird dies bei dem Verfahren zur Herstellung des Rohrgestelles gemäß Oberbegriff des Anspruches 6 dadurch erreicht, daß die Enden des mindestens einen Federbügels in die beiden Bohrungen des Einlegeteiles eingeführt und fixiert werden oder daß die Enden des mindestens einen Federbügels direkt am Schenkelende des Einlegeteiles befestigt werden, daß anschließend das so vorbereitete Einlegeteil mit seinem ersten Schenkel in ein erstes Teilstück des Rohrgestelles eingeschoben wird, daß danach ein zweites Teilstück des Rohrgestelles auf den zweiten Schenkel des Einlegeteiles aufgeschoben wird und daß schließlich die beiden Teilstücke des Rohrgestelles miteinander verschweißt werden.

Die Vorteile der Erfindung bestehen darin, daß das Einlegeteil einfach und kostengünstig im Rohrgestell befestigbar ist, ohne daß sehr große Anforderungen an die Toleranzgenauigkeit gestellt werden müssen. Das erfindungsgemäße Rohrgestell garantiert zusätzliche Sicherheit.

Es ist zweckmäßig, wenn die beiden Schenkel des Einlegeteiles gerade Enden aufweisen und nahe der Schenkelenden jeweils eine Bohrung im Einlegeteil vorgesehen ist, wobei in den besagten Bohrungen die Enden des Federbügels fixierbar sind. Das so ausgeführte Einlegeteil läßt sich einfach und kostengünstig fertigen und ist einfach im Rohrgestell zu befestigen.

Ferner ist es vorteilhaft, wenn ein Einlegeteil verwendet wird, dessen beide Schenkelenden schwalbenschwanzförmig ausgeführt sind, wobei die Bohrungen zur Aufnahme des Federbügels jeweils nahe der tiefsten Einkerbstelle eingebracht sind. Je nach Ausführung des Schwalbenschwanzes kann zur Befestigung des Federbügels sogar auf das Einbringen der Bohrungen verzichtet werden. Bei Verwendung der Schwalbenschwanzausführung wird verhindert, daß das Rohrgestell am Ende des Einlegeteiles Abdrücke des Einlegeteiles aufweist, weil auf diese Weise die Krafteinleitung in das Einlegeteil abgefedert wird.

Weiterhin ist es zweckmäßig, wenn das Einlegeteil beidseitig mit jeweils einem Federbügel im Rohrgestell verspannbar ist. Auf diese Weise ist ein Verrutschen des Einlegeteiles im Rohrgestell völlig unmöglich.

### Kurze Beschreibung der Zeichnung

In der Zeichnung sind zwei Ausführungsbeispiele der Erfindung anhand eines Freischwingers dargestellt.

Es zeigen:
- Fig. 1: eine perspektivische Gesamtansicht des Freischwingerrohrgestelles;
- Fig. 2: ein Detail von Fig. 1 im Bereich der Gehrung mit einer ersten Ausführungsvariante der Erfindung;
- Fig. 3: ein Einlegeteil in einer zweiten Ausführungsvariante der Erfindung;
- Fig. 4: ein Einlegeteil in einer dritten Ausführungsvariante der Erfindung.

Es sind nur die für das Verständnis der Erfindung wesentlichen Elemente gezeigt.

### Weg zur Ausführung der Erfindung

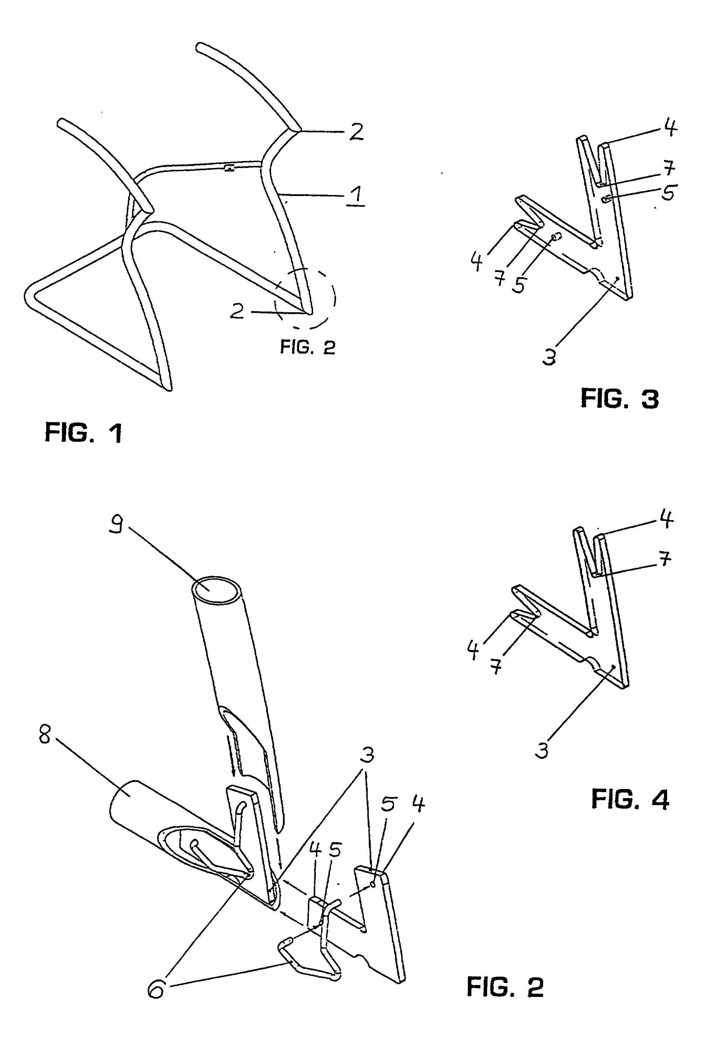

Nachfolgend wird die Erfindung anhand von drei Ausführungsbeispielen und der Figuren 1 bis 4 näher erläutert.

Fig. 1 zeigt in einer perspektivischen Gesamtansicht ein Freischwingerrohrgestell 1. Dieses Rohrgestell 1 ist aus einem Rundrohr hergestellt, es könnte aber auch ebenso gut aus einem Profilrohr hergestellt sein. Das Rohrgestell 1 ist an mehreren Stellen auf Gehrung 2 gesägt und die schrägen Kanten sind anschließend zusammengeschweißt worden. Ein Detail des Gehrungsbereiches 2 ist in Fig. 2 vergrößert dargestellt.

Im rechten Teilbild von Fig. 2 ist zunächst ein zweischenkliges Einlegeteil 3 in einer ersten Ausführungsvariante dargestellt. Das Einlegeteil 3 besteht aus Flachmaterial, die beiden Schenkel weisen jeweils gerade Enden 4 auf. Nahe dieser Enden 4 ist jeweils eine Bohrung 5 mittig in das Einlegeteil 3 eingebracht worden. Erfindungsgemäss ist nun vorgesehen, daß ein Federbügel 6 mit seinen beiden Enden in den Bohrungen 5 fixierbar und dadurch das Einlegeteil im Rohrgestell verspannbar ist. In einer anderen, zeichnerisch nicht dargestellten Ausführungsvariante ist das Einlegeteil 3 beidseitig mit jeweils einem in den Bohrungen 5 fixierten Federbügel 6 verspannbar. Dadurch wird ein Verrutschen des Einlegeteiles verunmöglicht.

Die beiden Teilbilder von Fig. 2 verdeutlichen den Ablauf des erfindungsgemäßen Verfahrens. Zunächst wird das Einlegeteil 3 vorbereitet. Der Federbügel 6 wird mit seinen beiden Enden in die Bohrungen 5 des Einlegeteiles geschoben und dort fixiert (s. rechtes Teilbild von Fig. 2). Die Form des Federbügels 6 ist der zweischenklige Form des Einlegeteiles 3 angepaßt, d. h. er hat ebenfalls zwei Schenkel. Anschließend wird das so vorbereitete Einlegeteil 3 mit seinem ersten Schenkel in ein erstes, auf Gehrung gesägtes Rohrstück 8 des Rohrgestelles 1 eingeschoben. Dabei wird der erste Schenkel des Federbügels 6 zusammengepreßt. Er drückt den ersten Schenkel des Einlegeteiles 3 gegen die Wandung und verspannt diesen somit im Rohrstück 8. Im nächsten Verfahrensschritt wird nun ein zweites, auf Gehrung gesägtes Teilstück 9 des Rohrgestelles 1 auf den zweiten Schenkel des Einlegeteiles 3 aufgeschoben. Dabei wird der zweite Schenkel des Federbügels 6 zusammengepreßt und somit der zweite Schenkel des Einlegeteiles 3 im zweiten Rohrstück 9 des Rohrgestelles 1 verspannt. Abschließend werden die beiden Teilstücke 8 und 9 miteinander verschweißt.

Das so entstandene Rohrgestell bietet im Bereich der Gehrung infolge Versteifung mittels des Einlegeteiles 3 eine zusätzliche Sicherheit. Das Einlegeteil 3 ist auf einfache Weise so fixiert, daß es bei einer Bewegung des Möbelstückes nicht wackeln kann. Das Verfahren ist kostengünstig und ohne Einhaltung enger Toleranzen zu realisieren.

Fig. 3 zeigt eine bevorzugte Ausführungsvariante für das Einlegeteil 3. Es unterscheidet sich von dem in Fig. 2 dargestellten Einlegeteil dadurch, daß die Enden 4 der beiden Schenkel nicht gerade, sondern schwalbenschwanzförmig ausgeführt sind. Die Bohrungen 5, in denen die Enden des Federbügels 6 fixierbar sind, sind mittig in den beiden Schenkeln angebracht. Sie befinden sich jeweils in der Nähe der tiefsten Einkerbstelle 7. Dieses Einlegeteil 3 wird wie oben bereits beschrieben in den Gehrungsbereich 2 des Rohrgestelles 1 eingebracht. Durch die spezielle "Schwalbenschwanz"- Ausführung wird gewährleistet, daß die Krafteinleitung in das Einlegeteil 3 abgefedert wird. Dadurch wird vermieden, daß am Ende 4 des Einlegeteiles 3 Abdrücke des Einlegeteiles 3 im Rohrgestell 1 sichtbar werden.

Fig. 4 zeigt eine weitere Ausführungsvariante des Einlegeteiles 3. Die Enden 4 der beiden Schenkel sind wie bei der Variante gemäss Fig. 3 schwalbenschwanzförmig ausgeführt. Im Vergleich zur Ausführungsform gemäss Fig. 3 fehlen hier aber die Bohrungen 5. Der mindestens eine Federbügel 6, mit welchem das Einlegeteil 3 im Rohrgestell 1 verspannt wird, läßt sich bei dieser Ausführungsform problemlos am schwalbenschwanzförmigen Ende des Einlegeteiles 3 befestigen, indem er z. B. in die tiefste Einkerbstelle 7 eingehängt wird. Die weiteren Verfahrensschritte entsprechen den bereits bei Fig. 2 beschriebenen.

Selbstverständlich ist die Erfindung nicht auf die beschriebenen Ausführungsbeispiele beschränkt. So können beispielsweise die Rohrgestelle nicht nur für Freischwingersitzmöbel, sondern auch für andere Möbel verwendet werden.

### Bezugszeichenliste

- 1: Rohrgestell
- 2: Gehrung
- 3: Einlegeteil
- 4: Enden von Pos. 3
- 5: Bohrung
- 6: Federbügel
- 7: Einkerbstelle
- 8: erstes Teilstück von Pos. 1
- 9: zweites Teilstück von Pos. 1

## Patentansprüche

1. Rohrgestell (1) für Möbel, welches an mindestens einer Stelle auf Gehrung gesägt und geschweißt ist, wobei im Bereich der Gehrung (2) zum Zwecke einer Versteifung ein zweischenkliges, sich in beide Richtungen des Rohrgestelles (1) erstreckendes Einlegeteil (3) aus Flachmaterial im Rohrgestell (1) angeordnet ist, wobei das Einlegeteil (3) mit mindestens einem im/am Einlegeteil (3) fixierten Federbügel (6) im Rohrgestell (1) verspannbar ist.

2. Rohrgestell (1) nach Anspruch 1, **dadurch gekennzeichnet, daß** die beiden Schenkel des Einlegeteiles (3) gerade Enden (4) aufweisen und nahe der Schenkelenden (4) jeweils eine Bohrung (5) im Einlegeteil (3) vorgesehen ist, wobei in den besagten Bohrungen (5) die Enden des Federbügels (6) fixierbar sind.

3. Rohrgestell (1) nach Anspruch 1, **dadurch gekennzeichnet, daß** die beiden Schenkelenden (4) des Einlegeteiles (3) schwalbenschwanzförmig ausgeführt sind und nahe der tiefsten Einkerbstelle (7) jeweils eine Bohrung (5) im Einlegeteil vorgesehen ist, wobei in den besagten Bohrungen (5) die Enden des Federbügels (6) fixierbar sind.

4. Rohrgestell (1) nach Anspruch 1, **dadurch gekennzeichnet, daß** die beiden Schenkelenden (4) des Einlegeteiles (3) schwalbenschwanzförmig ausgeführt sind und der Federbügel (6) direkt an den Schenkelenden (4) fixierbar ist.

5. Rohrgestell (1) nach einem der Ansprüche 1 bis 4, **dadurch gekennzeichnet, daß** das Einlegeteil (3) beidseitig mit jeweils einem Federbügel (6) im Rohrgestell (1) verspannbar ist.

6. Verfahren zur Herstellung eines Rohrgestelles (1) nach einem der Ansprüche 1 bis 5, **dadurch gekennzeichnet,**
- **daß** die Enden des mindestens einen Federbügels (6) in die beiden Bohrungen (5) des Einlegeteiles (3) eingeführt und fixiert werden oder daß die Enden des mindestens einen Federbügels (6) direkt am Schenkelende (4) des Einlegeteil (3) befestigt werden,
- **daß** anschließend das so vorbereitete Einlegeteil (3) mit seinem ersten Schenkel in ein erstes Teilstück (8) des Rohrgestelles (1) eingeschoben wird,
- **daß** danach ein zweites Teilstück (9) des Rohrgestelles (1) auf den zweiten Schenkel des Einlegeteiles (1) aufgeschoben wird und
- **daß** schließlich die beiden Teilstücke (8) und (9) miteinander verschweißt werden.

## Claims

1. A tubular frame (1) for furniture which is mitred and welded at one location at least, wherein a two-leg insert (3) made of flat material extending in both directions of the tubular frame (1) is fixed in the mitred area of the tubular frame (1) for stiffening purposes, whereby the insert (3) can be drawn tight in the tubular frame by means of at least one spring buckle (6) assembled in/on the insert (3).

2. A tubular frame (1) pursuant to claim 1, **characterised by** the fact that both legs of the insert (3) have straight ends (4), and by the fact that in each case there is a boring (5) in the insert (3) near the ends (4) of the legs, wherein the ends of the spring buckle (6) can be fixed in said borings (5).

3. A tubular frame (1) pursuant to claim 1, **characterised by** the fact that both ends (4) of the legs of the insert (3) are dovetailed, and by the fact that in each case there is a boring (5) in the insert near the deepest notch (7), wherein the ends of the spring buckle (6) can be fixed in said borings (5).

4. A tubular frame (1) pursuant to claim 1, **characterised by** the fact that both ends (4) of the legs of the insert (3) are dovetailed, and the spring buckle (6) can be fixed directly on the ends (4) of the legs.

5. A tubular frame (1) pursuant to one of the claims 1 through 4, **characterised by** the fact that the insert (3) can be drawn tight in the tubular frame (1) by means of a spring buckle on each side (6).

6. A method of manufacturing a tubular frame (1) pursuant to one of the claims 1 through 5, **characterised by** the fact that:
- the ends of at least one spring buckle (6) can be introduced into and fixed in both borings (5) of the insert (3), or by the fact that the ends of at least one spring buckle (6) are attached directly to the ends (4) of the legs of the insert (3),
- the first leg of the insert (3), so prepared, is then pushed into the first section (8) of the tubular frame (1),
- thereupon, a second section (9) of the tubular frame (1) is pulled over the second leg of the insert (1), and
- finally, both sections (8) and (9) are welded together.

## Revendications

1. Cadre tubulaire (1) pour meubles, scié en biais et soudé au moins à un endroit, une pièce d'insertion (3) à deux pieds en plats s'étendant dans les deux directions du cadre tubulaire (1) est disposée dans la zone d'assemblage en onglet (2) à l'intérieur de ce cadre tubulaire dans un but de consolidation. La pièce d'insertion (3) peut être serrée dans le cadre tubulaire à l'aide d'un étrier de ressort (6) fixé dans/sur la pièce d'insertion.

2. Cadre tubulaire (1) selon la revendication 1 **caractérisé par** les bouts (4) droits des deux pieds de la pièce d'insertion (3), et par un perçage (5) respectif prévu dans la pièce d'insertion (3), les bouts de l'étrier de ressort (6) pouvant être fixés dans lesdits perçages.

3. Cadre tubulaire (1) selon la revendication 1, **caractérisé par** les bouts (4) des deux pieds de la pièce d'insertion (3) fabriqués en queue d'aronde, et par un perçage prévu (5) respectivement dans la pièce d'insertion (3) près de la rainure (7) la plus profonde. Les bouts de l'étrier de ressort (6) peuvent être fixés dans lesdits perçages (5).

4. Cadre tubulaire (1) selon la revendication 1, **caractérisé par** les bouts (4) des deux pieds de la pièce d'insertion (3) fabriqués en queue d'aronde, l'étrier de ressort (6) pouvant être fixé directement sur les bouts des pieds (4).

5. Cadre tubulaire (1) selon l'une des revendications 1 à 4, **caractérisé par** la pièce d'insertion (3) pouvant être serrée dans le cadre tubulaire (1) des deux côtés à l'aide d'un étrier de ressort.

6. Procédé de fabrication d'un cadre tubulaire (1) selon l'une des revendications 1 à 5 :
- les bouts d'au moins un étrier de ressort (6) sont introduits et fixés dans les deux perçages (5) de la pièce d'insertion, ou sont directement attachés au bout des pieds (4) de la pièce d'insertion (3) ;
- la pièce d'insertion (3) ainsi préparée est introduite avec son premier pied dans la première partie (8) du cadre tubulaire (1) ;
- la deuxième partie (9) du cadre tubulaire (1) est mise sur le deuxième pied de la pièce d'insertion (1) et,
- les deux parties (8) et (9) sont soudées ensemble.
